# EUROPEAN PATENT SPECIFICATION

(11) **EP 2 739 005 B1**
(45) Date of publication and mention of the grant of the patent: **25.11.2015**
(21) Application number: 13195146.9
(22) Date of filing: 29.11.2013
(51) Int. Cl.: H04L 29/06, H04L 29/08

(54) **A method, apparatus and computer program for controlling access to content in a communications network**
Verfahren, Vorrichtung und Computerprogramm zur Steuerung des Zugriffs auf Inhalte in einem Kommunikationsnetz
Procédé, appareil et produit de programme ordinateur pour contrôler l'accès au contenu dans un réseau de communication

(30) Priority: 30.11.2012 GB 201221640
(43) Date of publication of application: 04.06.2014
(73) Proprietor: Openwave Mobility, Inc., Redwood City, CA 94063 (US)
(72) Inventor: Mischook, Richard, Tyrone Dungannon BY 71 6XP (GB); Van Es, Christopher, Antrim Belfast BT7 3NE (GB)
(74) Representative: EIP

(56) References cited:
- US-A1- 2009 132 713
- US-A1- 2010 088 761
- US-A1- 2010 153 568
- ANNE VAN KESTEREN: "Cross-Origin Resource Sharing", World Wide Web Consortium (W3C) W3C Working Draft, 17 March 2009 (2009-03-17), XP002720458, Retrieved from the Internet: URL:http://www.w3.org/TR/2009/WD-cors-2009 0317/ [retrieved on 2014-02-18]

## Description

### Technical Field

The present invention relates to a method, apparatus and computer program for controlling access to content in a communications network.

### Background

JavaScript is a programming or scripting language often implemented as part of a web page in order to create enhanced user interfaces and dynamic websites. It can be combined with a markup language such as HyperText Markup Language (HTML) to define various software applications (i.e. applications that perform dedicated functions). Web browsers of web-enabled devices such as computers, tablets or smartphones are used to execute such applications. For example, a web browser application can be used on a mobile phone to access weather information or stock market data from publicly available feeds according to a specific application selected by a user. The web browser used in such equipment typically has a JavaScript engine which is used to interpret JavaScript source code so that the relevant script can be accordingly executed.

More particularly, in a dynamic website, JavaScript is embedded in an HTML web page of the website so that the JavaScript can interact with a Document Object Model (DOM) of the web page. For example, a JavaScript application programming interface (API) such as a XMLHTTPRequest (XHR, where "XML" stands for Extensible Markup Language and "HTTP" stands for Hypertext Transfer Protocol) or Asynchronous JavaScript and XML (AJAX) request can be used to load new page content within the web page without having to reload the entire web page. JavaScript can therefore be used to provide interactive content, such as games, audio and video within a web page. XHR/AJAX requests can also be used to submit data to a server without reloading the web page, for example, a social network might allow a user to post a "status update" (i.e. a social description of the user's context) without leaving the currently displayed web page.

Web browsers enforce a so-called "same origin" policy which prevents a JavaScript application that was loaded from one origin (i.e. an application server) from receiving or configuring properties of the web page from another origin (i.e. a different server from the application server). This means that the JavaScript application may only access or receive data from an origin that has the same domain name, application layer protocol and port number (i.e. the "same origin") as the received data used to run the JavaScript application and cannot access data received from a different location (i.e. from a "cross-origin").

US 2010/153568 A1 discloses circumventing the same origin policy by using a proxy to intercept cross-origin responses and replace the network location identified in the cross-origin response with a same-origin network location. The same-origin network location with which to replace the cross-origin network location may be determined from information included in a corresponding intercepted cross-origin request.

"Cross-Origin Resource Sharing" by Anne van Kesteren, W3C Working Draft, 3 April 2012, discloses Cross-Origin Resource Sharing (CORS) policy and, more particularly, including an "access-control-allow-origin" header field in a response from a cross origin resource to enable a client to access the cross origin response.

### Summary

According to the invention, there is provided the method of claim 1.

Determining an access permission for requested content based on a predetermined criterion being satisfied allows an access control parameter to be selectively included in the response message for providing access to the requested content contained within the response message. The selective inclusion of the access control parameter therefore provides an access control over content that can be accessed by the application module dependent on the attribute of the second server satisfying the predetermined criterion with respect to the first server. Therefore, decisions can be made, based on the analysis of the request message, whether or not to permit access by the application module to the requested content.

The predetermined criterion may be satisfied where the second server is determined to be other than the first server. Therefore, for example, the first server can be an application server that hosts the application module and the second server can be a server that is different from the application server, such as a server that is operated by a third party. Thus, the selective inclusion of the access control parameter in the response message occurs when the second server is determined to be different from the first server (i.e. and is therefore a cross-origin server).

The response message may also comprises data identifying the second server from which the portion of the requested content is retrieved.

The access permission may be further based on a further predetermined criterion. The further predetermined criterion is satisfied where the second server is indicated as being a server from which content is to be granted access by the application module. Therefore, using a further predetermined criterion allows an additional level of access control whereby the selective inclusion of the access control parameter is further based on a determination whether or not access should be granted to the second server.

The response message may comprise the access control parameter in the event that the predetermined criterion has been satisfied. Therefore, access to content contained in the response message is provided for those request messages that satisfy the predetermined criterion.

The attribute relating to the second server may comprise at least one of a domain name, an application layer protocol and a port number. The attribute thus may relate to information regarding an origin of the second server such that the predetermined criterion is satisfied based on the origin of the second server.

The request message may be a cross-origin request message and the response message may be a cross-origin response message. The request message can therefore be intended for a destination whose origin is different from the origin associated with the application module from which the request message was sent. The request message may be an asynchronous JavaScript and extensible markup language (AJAX) request message and the response message may be an AJAX response message.

The access control parameter comprises a cross-origin resource sharing (CORS) header configured to provide the access permission. Such a parameter can be interpreted by a web browser that is configured with the CORS protocol so that the application module can be permitted to access the requested content contained within the response message.

The application module may be a JavaScript application that is executed by the user equipment using the data retrieved from the first server. The JavaScript application may be executed by a web browser of the user equipment.

The content may comprise media content such as text, image, audio or video files.

According to the invention, there is also provided the intermediate network element of claim 12.

According to the invention there is also provided the computer program of claim 13.

Further features and advantages of the invention will become apparent from the following description of preferred embodiments of the invention, given by way of example only, which is made with reference to the accompanying drawings.

### Brief Description of the Drawings

Figure 1 shows a schematic block diagram of an example of system architecture according to an embodiment of the present invention;
Figure 2 shows a schematic block diagram of network elements present in the system architecture of Figure 1 in further detail;
Figure 3 shows a schematic state flow diagram of processes that occur in an example of a method according to an embodiment of the present invention;
Figure 4 shows a schematic block diagram of an example of the system architecture of Figure 1 in further detail;
Figure 5 shows a schematic block diagram of an example of a web page in accordance with an embodiment of the present invention; and
Figure 6 shows a schematic signalling diagram of processes that occur in a second example of a method according to an embodiment of the present invention.

### Detailed Description

In the following description of exemplary embodiments it should be noted that the term "user equipment" includes apparatus that are both wireless devices and wired devices. In general, wireless devices include any device capable of connecting wirelessly to a network. This includes in particular mobile devices including mobile or cell phones (including so-called "smart phones"), personal digital assistants, pagers, tablet and laptop computers, content-consumption or generation devices (for music and/or video for example), data cards, USB dongles, etc., as well as fixed or more static devices, such as personal computers, game consoles and other generally static entertainment devices, various other domestic and non-domestic machines and devices, etc.

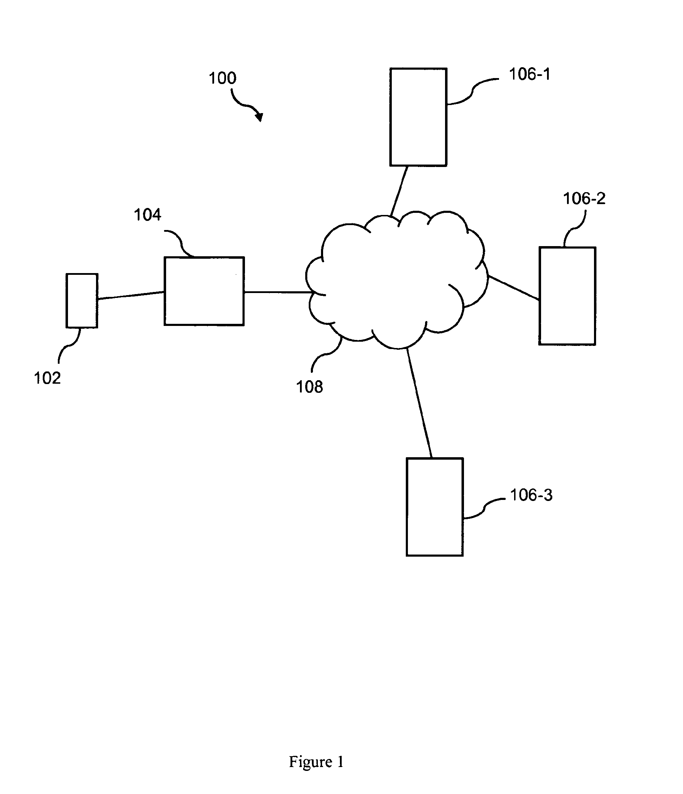

Embodiments of the present invention are concerned with controlling access to content in a communications network. A user equipment in the communications network can be configured to operate within various types of network, an example of such a network being shown in Figure 1 of the accompanying drawings.

Figure 1 shows schematically a simplified example of a communications network 100, which may typically comprise, for example, Internet Protocol Multimedia System (IMS) architecture. The network comprises a plurality of network elements 102, 104, 106, 108. In particular, there are a plurality of UEs 102 (only one shown and described for simplicity of explanation), an intermediate network element (INE) 104, and a plurality of servers 106. The UE 102 is in communication with the INE 104, which in turn, is in communication with a network such as the internet 108. The INE 104 is capable of communicating with the plurality of servers 106 via the internet 108.

In this example, the UE 102 uses a web browser to execute a particular JavaScript application. The application is initially loaded during communications with an application server 106-1 after the UE 102 has requested to view a particular web page. The application server 106-1 is said to "host" the JavaScript application due to having provided relevant executable files for loading and running the JavaScript application. The application server 106-1 is thus generally known as a "same origin" server 106-1 with respect to that hosted application. All other servers 106-2, 106-3 are known as cross-origin servers with respect to that application. Request messages such as XHR or AJAX requests sent from the application via the web browser to access data from the same origin server are accordingly generally known as same origin requests. Responses to the same origin requests are generally known as same origin responses. Request messages sent to access data from the cross-origin servers are generally known as cross-origin requests. Responses to the cross-origin requests are generally known as cross-origin responses.

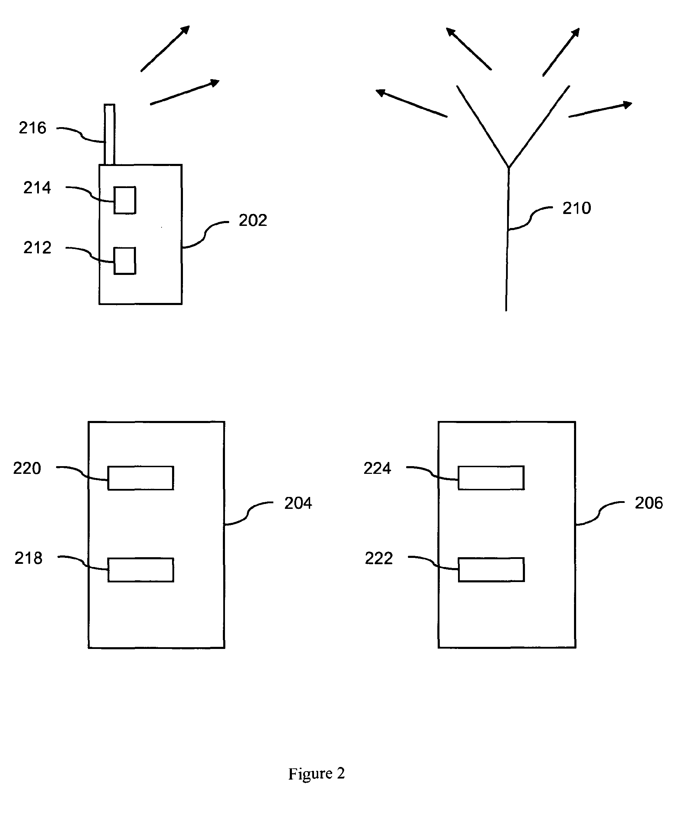

Figure 2 shows schematically a UE 202 such as a mobile phone, an INE 204, a server 206 and a network control apparatus 210 for use in the communications network of Figure 1. The UE 202 contains the necessary radio module 212, processor(s) and memory/memories 214, antenna 216, etc. to enable wireless communication with the network. The UE 202 in use is in communication with a radio mast associated with the network control apparatus 210. As a particular example in the context of UMTS (Universal Mobile Telecommunications System), there may be a network control apparatus 210 (which may be constituted by for example a so-called Radio Network Controller) operating in conjunction with one or more Node Bs (which, in many respects, can be regarded as "base stations"). As another example, LTE (Long Term Evolution) makes use of a so-called evolved Node B (eNB) where the RF transceiver and resource management/control functions are combined into a single entity. The network control apparatus 210 (of whatever type) may have its own radio module, processor(s) and memory/memories, etc. Similarly, the INE 204 may have its own radio module 218, processor(s) and memory/memories 220, etc. Similarly, each of the plurality of servers 206 may have their own radio module 222, processor(s) and memory/memories 224, etc.

A UE 102 such as a mobile phone, laptop, desktop computer or the like can operate a web browser in order to access information via the internet 108. For example, the user can enter a uniform resource locator (URL) in an input field of a web browser in order to load data from a particular server, commonly referred to as a web page of a website, addressed by the URL. The web page may have embedded script elements which direct the browser to load particular JavaScript based applications. Such JavaScript applications may be used to provide dedicated services to a user, such as providing information about the local weather or stock market data.

When loading a particular JavaScript application, a web browser sends an initial request to the application server 106-1, via the INE 104, so that the browser can receive HTML, JavaScript and other resources (i.e. data) used to build the JavaScript application and display the JavaScript application to the user in the browser. The requested resources also include JavaScript files that contain the JavaScript application's business logic code (i.e. the functional algorithms that handle information exchange between the web browser and the application server).

The initial request may be sent in response to a web page being loaded, whereby the web page contains a script element, which when executed by the browser instructs the loading of the JavaScript application. This script element could be inserted into a HTML web page before it is received by the apparatus. For example, the INE 104 or some other INE can intercept the HTML web page from its origin before it reaches the apparatus so that it can insert the script element into the HTML web page.

The INE 104 is a device, network node or module that can be co-located or integrated with existing network architecture. It can also be a stand-alone device. The INE 104 is placed in the communications network between the UE 102 and other network elements such as servers 106-2, 106-3 which are associated with third party content providers (i.e. third party in the respect that they are different from an operator associated with the INE 104). The INE 104 is used to intercept signalling or messages from the UE 102 and to determine whether or not a cross-origin request has been made. Such messages are processed in order to determine whether or not access permission is required to allow the UE 102, and more particularly, a JavaScript application running in a browser of the UE 102, to access content as requested by the messages. Accordingly, the INE 104 provides access permissions to cross-origin response messages which contain the requested content and which correspond with the cross-origin request messages in order that the JavaScript application can access the requested content contained within the cross-origin response message. Therefore a JavaScript application is provided with permission to access content from servers other than the server that hosts the JavaScript application so that, for example, third party service providers (i.e. service providers that are not associated with the party hosting the JavaScript application) can provide their services to end users via the JavaScript application without access being denied as a consequence of the same origin policy.

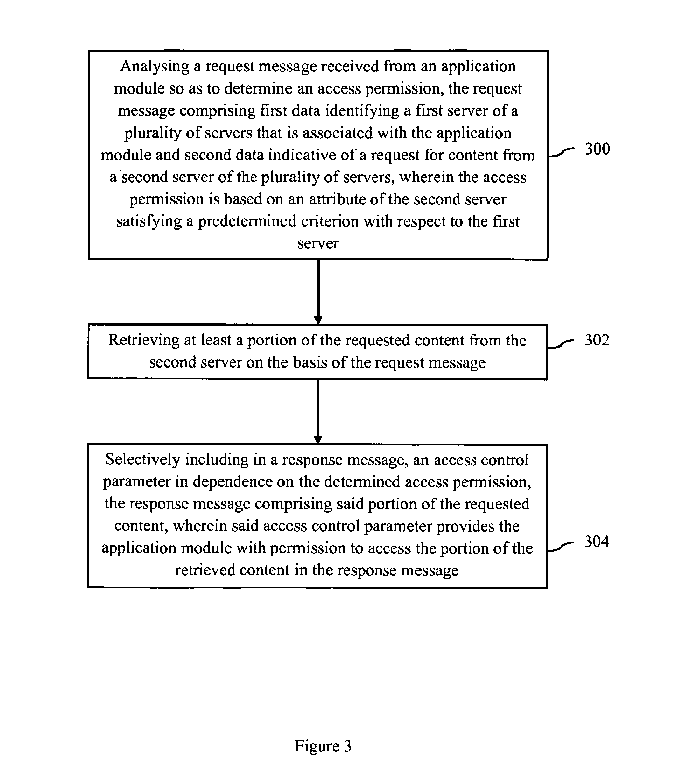

Figure 3 shows a schematic state flow diagram of a method for controlling access to content in a communications network such as network 100, according to an example embodiment. The communications network comprises a user equipment such as UE 102 and a plurality of servers, such as servers 106-1, 106-2, 106-3. The user equipment 102 comprises an application module, such as the aforementioned JavaScript application, configured to process executable code using data retrieved from a first server (i.e. the same origin server 106-1) of the plurality of servers.

At step 300, a request message received from the application module is analysed to determine an access permission relating to a second server of the plurality of servers. The access permission determines whether or not the application module should be granted access to content retrieved from the second server based on an attribute of the second server satisfying a predetermined criterion with respect to the first server. The request message comprises first data such as an identifier that identifies the first server associated with the application module. The request message also comprises second data which is indicative of a request made by the application module to receive content from the second server. The attribute is one of a domain name, an application layer protocol and a port number and, for example, the predetermined criterion is satisfied when it is determined that the second server is other than the first server (and therefore the second server is a cross-origin server such as servers 106-2 or 106-3). Such a determination of the predetermined criterion being satisfied therefore involves a comparison between the attribute of the first server and the second server to see whether or not they match.

At step 302, at least a portion of the requested content is retrieved from the second server on the basis of the request message. The content comprises media content such as text, images, audio and/or video files or portions thereof. The portion of the requested content is returned from the second server in a response message.

At step 304, an access control parameter is selectively included in the response message in dependence on the determined access permission. The access control parameter provides the application module with permission to access the portion of the retrieved content in the response message. For example, if it is determined that the request message is for content from a server for which the application module should be allowed access, then the access control parameter is included in the response message. If it is determined that the request message is for content from a server for which the application module should be denied access, then the access control parameter is not included in the response message. The response message is therefore sent to the application module either with an included access control parameter or without an access control parameter. A web browser of the user equipment receives and parses the response message. The web browser thereby determines whether or not the response message includes an access control parameter. If the access control parameter is included, the web browser interprets the access permission and accordingly allows the application module to access the content contained within the response. If no access control parameter is detected, the web browser treats the response message as a typical cross-origin response message and, as a consequence of the same origin policy, denies access to the response message. The steps shown in Figure 3 are performed by the INE 104 shown in Figure 1.

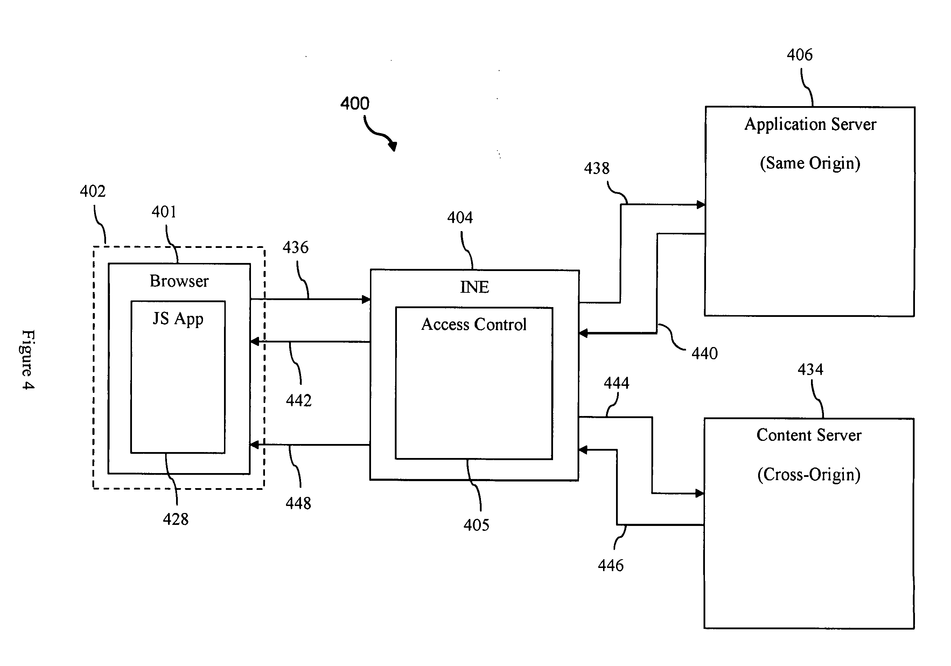

Figure 4 shows a schematic block diagram of an example of the system architecture of Figure 1 in further detail. There is provided a UE 402 having a web browser 401, an INE 404, an application server 406 (i.e. the same origin server) and a third party server 434, referred to herein as a content server, (i.e. the cross-origin server). The INE 404 is located in a communication path between the browser 401 and the application server 406, and also between the browser 401 and the content server 434. It is noted that there may be a plurality of third party servers however for simplicity of illustration, only one such server is shown. The INE 404 is arranged to intercept all communications between the browser 401 and either of the application server 406 and the content server 434.

The INE 404 has an access control module 405 which controls the data to which the browser 401 can gain access. The application server 406 generally contains data and content populated by an operator of the application server 406 and as such may contain a database (not shown) to store such content. Similarly, the content server 434 generally contains data and content populated by an operator of the content server 434 and as such may contain a database (not shown) to store such content.

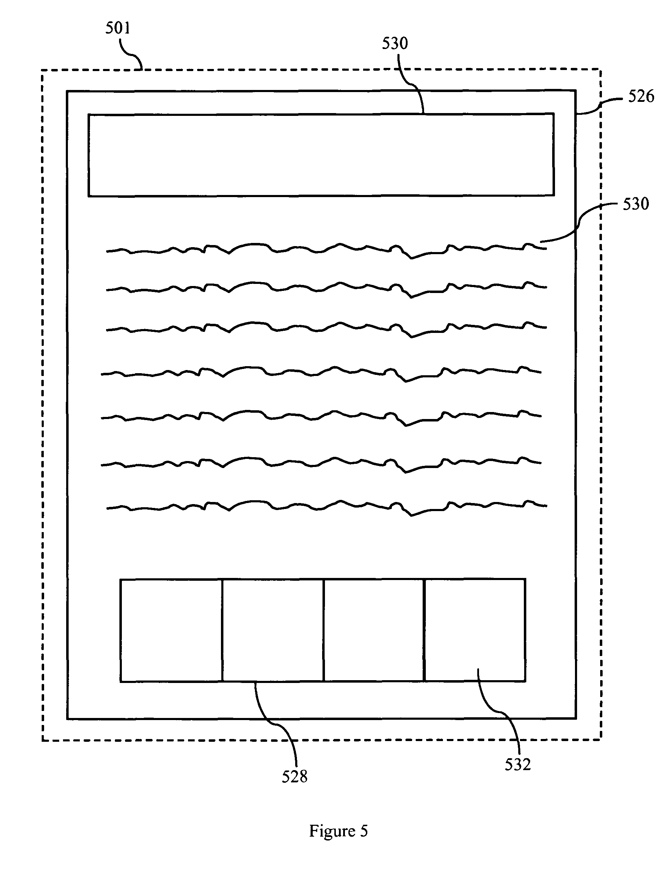

In this example, the browser 401 displays a web page and has already loaded the JavaScript application 428. The JavaScript application 428 is a floating toolbar application having a plurality of user-selectable icons for triggering dedicated JavaScript applications. An example of such a web page having a floating toolbar application is shown in Figure 5.

Figure 5 shows an example of a web page 526 and floating toolbar 528 displayed in a web browser 501. The web browser 501 is generally a software application that can be used to access data over the internet. The accessed data can typically be displayed via the web browser 501 in the form of an HTML web page 526 having a plurality of content elements shown generally at 530. The floating toolbar application 528 is provided, in this example, in a bottom region of the web page 526 and has a plurality of user-selectable icons 532. The browser 501 executes a dedicated JavaScript application for each selected icon 532. For example, the icons 532 can be selected in order to obtain information about the local weather or stock market. The toolbar 528 is defined to be "floating" such that a user can scroll on a web page without the toolbar changing its position relative to the browser frame.

In operation, a user can select one of the plurality of icons 532 to trigger a dedicated application. For example, the user may wish to retrieve local weather information, and therefore, can select an icon 532 on the floating toolbar 528 dedicated to weather information retrieval. In response to the user selection, a JavaScript application is initiated to retrieve and display local weather information. In order to do this, the toolbar application 528 causes the browser 502 to send an XMLHTTPREQUEST message or AJAX request (herein referred to as "request message" 436) towards an intended destination server such as the application server 406 or content server 434. The request message 436 is a specific request for particular data or content stored at a specified destination for use by the selected application.

The INE 404 intercepts or receives the request message 436 and analyses it to determine a message type. In particular, the access control module 436 analyses the received request message 436 to determine whether or not it is a same origin request directed to the application server 406 or cross-origin request directed to a cross-origin server such as the content server 434. For example, the message is parsed by INE 404 to identify origin and host headers or fields of the message. The origin field identifies the application server 406 as the server from which the requesting JavaScript application originated. The host field identifies the server from which the desired content is requested. Therefore, if the entries in the origin and host fields match, then the request message is determined to be a same origin request message. If the entries in the origin and host fields differ, then the request message is determined to be a cross-origin request message.

If the request message 436 is determined at the INE 404 to be a same origin request then the request message 436 is accordingly forwarded to the application server 406 in its original format as an XMLHTTPREQUEST or AJAX message 438. In response, the application server 406 sends an XMLHTTPRESPONSE message or AJAX response (herein referred to as "response message" 440) destined for the toolbar application 428. The response message 440 contains at least a portion of the requested content.

This response message 440 is intercepted by the INE 404 which either determines that the response message 440 has been sent in response to the receipt by the application server 406 of the request message 438 or otherwise determines the response message 440 as having been received from the same origin as that which loaded the application from which the request message 436 was sent. Accordingly, as the response message 440 is determined to be a same origin response, it is forwarded to the browser 402 and hence toolbar application 428 in its original format as an XMLHTTPRESPONSE message or AJAX response message 442. As the response message 442 is compliant with the same origin policy, the browser 401 will permit access to content contained within the response 442 (and thus effectively permits access to the application server 406).

If the request message 436 is determined at the INE 404 to be a cross-origin request then the INE 404 interprets the request as such and determines the intended destination for that request, which in this case is the content server 434. The access control module 405 then determines the destination from the host field and sends the cross-origin request message 444 to the destination content server 434. In response, the content server 434 sends a cross-origin response message 446 destined for the toolbar application 428. The cross-origin response message 446 contains at least a portion of the requested content.

The cross-origin response message 446 is intercepted by the INE 404, and the access control module 405 of the INE 404 either determines that the cross-origin response message 446 has been sent in response to the receipt by the content server 434 of the cross-origin request message 444 or otherwise determines the cross-origin response message 446 as having been received from a cross-origin with regard to the toolbar application 428. For example, the INE 404 could insert a key into the cross-origin request message 444 that is sent to the content server 434. The content server 434 parses the cross-origin request message 444 to determine which content has been requested and also to obtain the key. The key is then inserted into the cross-origin response message 446, which key enables the INE 404 to correlate the cross-origin response message 446 with the cross-origin request message 444.

As the cross-origin response message 446 is determined to be from a cross-origin, the access control module 405, in response to this determination, determines an access permission for the content server 434 to see whether or not the JavaScript application 428 should be allowed to access the content received from the cross-origin content server 434. The access permission is determined by performing a look up of the content server 434 in a permissions database (not shown) associated with the INE 404. The permissions database is a programmable database that is populated by an operator with various access permission levels or status relating to which content servers can be accessed by the JavaScript application 428. Therefore, the operator may decide whether to allow or deny access by the application 428 to any particular server of a plurality of servers. The permissions database may also be populated with a token field relating to an authentication of the JavaScript application 428 from which the request messages 436 are received. As such, a JavaScript application developer may be provided with an authentication token, which is added to each request message to indicate that the associated JavaScript application is authenticated for use with the INE 404. When the INE 404 receives the request message 434 and performs a look up in the permissions database, it also performs a look up of the token to see whether or not the JavaScript application is authenticated for use with the INE 404. If there is no token or the token is not recognised then access to the requested server is denied.

If the permissions database is indicative that access to content from the content server 434 should be allowed, then the cross-origin response message 446 is modified by the access control module 405 to indicate to the browser 401 to allow access to content contained within the cross-origin response message 446. In particular, the access control module 405 modifies the cross-origin response message 446 by adding an access control parameter to the cross-origin response message 446. The access control module 405 then sends the modified cross-origin response message 448 to the browser 402 and hence the toolbar application 428. Despite the response being from a cross-origin and thus by its cross-origin nature, violating the same origin policy, the browser 401 can access the content within the modified cross-origin response message 448 due to the access control parameter included within the response message 448.

Accordingly, the browser 401 parses the modified cross-origin response message 448 and access to the content is provided. Specifically, the content of the modified cross-origin response message 448 is passed to the toolbar application 428 by the browser 401. Therefore, although the cross-origin response message 446 would ordinarily violate the same origin policy and be rejected, the access control module 405 enables such a response message 446 to be intercepted and modified so that the same origin policy is circumvented and the content received from the cross-origin server 434 (i.e. the content contained within the modified cross-origin response) can be received by the toolbar application 428.

If the permissions database is indicative that access to content from the content server 434 is to be denied then the cross-origin response message 446 is forwarded by the INE 404 to the application 428 without any modification. As a consequence of the same origin policy, and in the absence of a suitable access control parameter, the application 428 is denied access by the browser 401 to the content within the cross-origin response message 446. The application 428 is therefore unable to receive the requested content from the non-permitted content server.

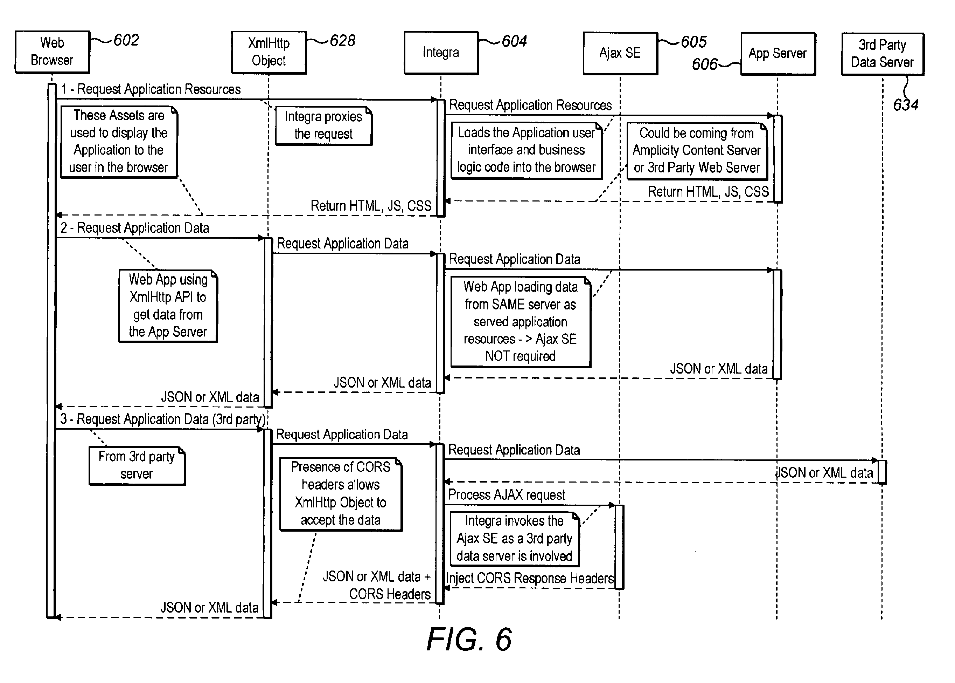

Figure 6 shows a schematic signalling diagram of an example method according to an embodiment of the invention. A web browser 601 operating at a user equipment (not shown) communicates with an application server 606 and a third party data server 634 via a wrapper or adapter pattern 604 (labelled as "Integra"). The web browser 601 also communicates with an XMLHTTP Object 628 such as JavaScript application operating in a web page loaded by the web browser 602. An AJAX Service Enabler (SE) module 605 is associated with the wrapper 604 and is used to determine access permissions for cross-origin messages.

In this exemplary method, the web browser performs three distinct, different types of requests labelled as "1 - Request Application Resources", "2 - Request Application Data" and "3 - Request Application Data (3^{rd} party)".

In a first step, a user makes a request to view a web page by, for example, typing a URL in a URL field of the web browser 601. A script element is embedded in the requested web page such that, as the web page is loaded, the script element is executed to direct the web browser 601 to retrieve application resources from a specified application server 606 via the wrapper 604. Thus an initial request (or set of requests) is sent towards the application server 606 to load HTML, JavaScript and other resources that are used to build and display the application in the web browser 602. The application resources also include JavaScript files that contain the application's business logic code, and when loaded present a user interface for interacting with the application.

In a second step, after having loaded the JavaScript application 628 required to run the user interface and business logic, the JavaScript application 628 requests data from the network. In this step the data being requested is obtained from the same server which provided the resources in the first step (i.e. the application server 606). Consequently, specific access permission to the requested data is not required as the requested data would not violate the same origin policy. The requested data can be returned as XML data or JavaScript Object Notation (JSON) data.

In a third step the application 628 loads data from another web server 634 other than the application server 606. For example, a mashup application can combine data from multiple sources to provide a service. The source of the data (i.e. being from a cross-origin server) would ordinarily prevent the web browser 602 from loading the data as a consequence of violating the same origin policy. However, in response to a determination that the request is for data from a cross-origin server, the wrapper 604 invokes the AJAX SE 605 which inserts CORS headers into a HTTP response message received from the third party data server 634. The presence of the CORS header means that the web browser 601 will accept the data contained within the HTTP response message and make it available to the application 628. The insertion or injection of the CORS headers occurs in response to a determination that the third party data server 634 is a server which is authorised to provide data to the application 628 and thereby provides a security control over the data that can be accessed by the application 628. The CORS headers are a type of HTTP header as defined by the CORS specification compiled by the World Wide Web Consortium (W3C). An example of such a CORS header for permitting access to content contained within a response message is an "Access-Control-Allow-Origin" header which specifies a location from which access to content should be allowed. For example a header such as "Access-Control-Allow-Origin: *" would indicate to a web browser 602 that it should allow content from any origin. Alternatively, the "*" parameter may be replaced by an origin specified in the request message so that only content from the specified origin can be provided to the JavaScript application 628.

The above embodiments are to be understood as illustrative examples of the invention. Further embodiments of the invention are envisaged. For example, in the above embodiments, a request message 436 was interpreted as either being of a same origin or a cross-origin based on an origin field and a host field in the request message. In alternative exemplary embodiments, the user equipment is configured to add a custom header to the request message 436 that can be identified by the INE 404 as being an allowable cross-origin request, such that the cross-origin response will be modified to include a CORS header due to the identification that the cross-origin request is allowable. In this manner, no permission database look up is required.

In the above embodiments, content is retrieved from a server using a request message 436 and is therefore "pulled" from the desired server. Based on access permissions determined at the INE 404, a cross-origin response message 446 associated with a cross-origin request message 444, can be modified so that the application module 428 can access the content contained within the cross-origin response message 448. In alternative embodiments a cross-origin request message 436 is not necessary. Instead, content can be "pushed" to the application module. For example, after an application module 428 has been loaded, the INE 404 can recognise the loading of the application module 428 and, in response, notify selected third party servers of the loading of the application module 428. The third party servers are thereby made aware of the loaded application module 428 and can push content to that loaded application module 428. The INE 404 receives messages comprising content from the selected third party servers, determines access permissions associated with the selected third party servers, and, responsive to a determination that access should be granted, adds CORS headers to the messages to enable the web browser 401 to accept those messages.

In the above embodiments, only a single application module 428 was described. However, in other exemplary embodiments the INE 404 may operate with several independent application modules and comprise access permissions relating to each application module.

In the above embodiments, the permissions database was described as being programmable. In other exemplary embodiments, the permissions database may additionally employ rules to dynamically create access permissions. For example, the permissions database may comprise a list of servers. If a server is determined to have an invalid origin (e.g. if content generally no longer exists or is no longer accessible at the specified location), or is unresponsive, the access permission for that server could be set to deny access. Such a determination may be periodic such that the access permissions are kept up-to-date.

In the above embodiments, each request message from the application module was routed through the INE 404. However, in alternative example embodiments an additional Network Equipment Provider (NEP) module can be used to initially receive or intercept request messages and selectively direct the request messages to the INE 404 based on a characteristic of the request message. For example, the characteristic may be the custom header of the alternative example embodiment discussed above that indicates whether or not the request message is a cross-origin or same origin request message. If the request message 436 is a same origin request message then it is forwarded to the same origin without passing through the INE 404. If the request message 436 is a cross-origin request message then it is sent to the INE 404. For example, the NEP may use Deep Packet Inspection (DPI) or a high capacity router.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method for controlling access to content in a communications network (400), the communications network comprising a user equipment (402), an intermediate network element (404) and a plurality of servers (406, 434), the user equipment (402) comprising an application module (428) configured to process executable code using data retrieved from a first server (406) of the plurality of servers, the method comprising:
analysing, at the intermediate network element (404), a request message (436) received from the application module (428) so as to determine an access permission, the request message (436) comprising first data identifying the first server (406) associated with the application module (428) and second data indicative of a request for content from a second server (434) of the plurality of servers, wherein the access permission is based on an attribute of the second server (434) satisfying a predetermined criterion with respect to the first server (406);
retrieving, at the intermediate network element (404), at least a portion of the requested content from the second server (434) on the basis of the request message; (436);
at the intermediate network element (404), selectively including in a response message (448), an access control parameter in dependence on the determined access permission, the response message (448) comprising said portion of the requested content wherein said access control parameter provides the application module (428) with permission to access the portion of the retrieved content in the response message (448), and wherein the access control parameter comprises a cross origin resource sharing header configured to provide the access permission; and
at the intermediate network element (404), sending the response message (448) to the application module.

2. A method according to claim 1, wherein the predetermined criterion is satisfied where the second server (434) is determined to be other than the first server (406).

3. A method according to claim 1 or 2, wherein the response message also comprises data identifying the second server from which the portion of the requested content is retrieved.

4. A method according to any preceding claim, wherein the access permission is further based on a further predetermined criterion, said further predetermined criterion being satisfied where the second server (434) is indicated as being a server from which content is to be granted access by the application module (428).

5. A method according to any of claim 2 to claim 4, wherein the response message (448) comprises the access control parameter in the event that the predetermined criterion has been satisfied.

6. A method according to any preceding claim, wherein the attribute comprises at least one of a domain name, an application layer protocol and a port number.

7. A method according to any preceding claim wherein the request message is a cross origin request message and the response message is a cross origin response message.

8. A method according to any preceding claim, wherein the request message (436) is an asynchronous JavaScript and extensible markup language request message and the response message (448) is an asynchronous JavaScript and extensible markup language response message.

9. A method according to any preceding claim, wherein the application module (428) is a JavaScript application that is executed by the user equipment (402) using the data retrieved from the first server (406).

10. A method according to claim 9, wherein the JavaScript application is executed by a web browser of the user equipment (402).

11. A method according to any preceding claim, wherein the content comprises media content.

12. An intermediate network element (404) for controlling access to content in a communications network (400), the communications network (400) comprising a user equipment (402) and a plurality of servers (406, 434), the user equipment comprising an application module (428) configured to process executable code using data retrieved from a first server (406) of the plurality of servers, the intermediate network element (404) comprising a processing system arranged to cause the intermediate network element (404) to perform the method of any of claims 1 to 11.

13. A computer program comprising a set of instructions for execution by an intermediate network element (404) in a communications network (400) having a user equipment (402) and a plurality of servers (406, 434), the user equipment (402) comprising an application module (428) configured to process executable code using data retrieved from a first server (406) of the plurality of servers, wherein the set of instructions, when executed by the intermediate network element (404), cause the intermediate network element (404) to perform the method of any of claims 1 to 11.

## Patentansprüche

1. Verfahren zur Steuerung des Zugriffs auf Inhalte in einem Kommunikationsnetz (400), wobei das Kommunikationsnetz ein Nutzergerät (402), ein zwischengeschaltetes Netzwerkelement (404) und mehrere Server (406, 434) aufweist, wobei das Nutzergerät (402) ein Anwendungsmodul (428) aufweist, ausgestaltet, um einen ausführbaren Code zu verarbeiten unter Verwendung von Daten, die von einem ersten Server (406) der mehreren Server abgerufen werden, wobei das Verfahren Folgendes umfasst:
das Analysieren einer Anforderungsnachricht (436), die von dem Anwendungsmodul (428) empfangen wird, an dem zwischengeschalteten Netzwerkelement (404), um eine Zugangsberechtigung festzustellen, wobei die Anforderungsnachricht (436) erste Daten aufweist, die den ersten Server (406), der mit dem Anwendungsmodul (428) verbunden ist, identifizieren, und zweite Daten, die Angaben über eine Anforderung von Inhalten von einem zweiten Server (434) der mehreren Server enthalten, wobei die Zugangsberechtigung auf einem Attribut des zweiten Servers (434) basiert, welcher ein vorgegebenes Kriterium in Bezug auf den ersten Server (406) erfüllt;
das Abrufen mindestens eines Teils des angeforderten Inhalts an dem zwischengeschalteten Netzwerkelement (404) von dem zweiten Server (434) aufgrund der Anforderungsnachricht (436) ;
das selektive Einbeziehen eines Zugangssteuerungsparameters in einer Antwortnachricht (448) in Abhängigkeit von der festgelegten Zugangsberechtigung am zweiten zwischengeschalteten Netzwerkelement (404), wobei die Antwortnachricht (448) den Teil des angeforderten Inhalts aufweist, wobei der Zugangssteuerungsparameter dem Anwendungsmodul (428) die Erlaubnis erteilt, auf den Teil des abgerufenen Inhalts in der Antwortnachricht (448) zuzugreifen, und wobei der Zugangssteuerungsparameter einen Cross-Origin Resource Sharing Header aufweist, der ausgestaltet ist, um die Zugangsberechtigung bereitzustellen; und
das Senden der Antwortnachricht (448) an dem zwischengeschalteten Netzwerkelement (404) an das Anwendungsmodul.

2. Verfahren nach Anspruch 1, wobei das vorgegebene Kriterium erfüllt ist, wenn der zweite Server (434) bestimmt wird, ein anderer als der erste Server (406) zu sein.

3. Verfahren nach Anspruch 1 oder 2, wobei die Antwortnachricht ebenfalls Daten aufweist, die den zweiten Server, von dem der Teil des angeforderten Inhalts abgerufen wird, identifizieren.

4. Verfahren nach einem der vorhergehenden Ansprüche, wobei die Zugangsberechtigung ferner auf einem weiteren vorgegebenen Kriterium basiert, wobei das weitere vorgegebene Kriterium erfüllt ist, wenn der zweite Server (434) als ein Server angegeben ist, von dem durch das Anwendungsmodul (428) Zugriff auf Inhalte gewährt werden soll.

5. Verfahren nach einem der Ansprüche 2 bis 4, wobei die Antwortnachricht (448) den Zugangssteuerungsparameter aufweist, falls das vorgegebene Kriterium erfüllt wurde.

6. Verfahren nach einem der vorhergehenden Ansprüche, wobei das Attribut mindestens einen eines Domain-Namens, eines Anwendungsschichtprotokolls und einer Portnummer aufweist.

7. Verfahren nach einem der vorhergehenden Ansprüche, wobei die Anforderungsnachricht eine Cross Origin-Anforderungsnachricht ist und die Antwortnachricht eine Cross Origin-Antwortnachricht ist.

8. Verfahren nach einem der vorhergehenden Ansprüche, wobei die Anforderungsnachricht (436) ein asynchrones JavaScript und eine Anforderungsnachricht mit einer erweiterbaren Auszeichnungssprache und die Antwortnachricht (448) ein asynchrones JavaScript und eine Antwortnachricht mit einer erweiterbaren Auszeichnungssprache ist.

9. Verfahren nach einem der vorhergehenden Ansprüche, wobei das Anwendungsmodul (428) eine JavaScript-Anwendung ist, die durch das Nutzergerät (402) ausgeführt wird unter Verwendung der Daten, die von dem ersten Server (406) abgerufen werden.

10. Verfahren nach Anspruch 9, wobei die JavaScript-Anwendung von einem Web-Browser des Nutzergeräts (402) ausgeführt wird.

11. Verfahren nach einem der vorhergehenden Ansprüche, wobei der Inhalt Medieninhalte aufweist.

12. Zwischengeschaltetes Netzwerkelement (404) zur Steuerung des Zugriffs auf Inhalte in einem Kommunikationsnetz (400), wobei das Kommunikationsnetz (400) ein Nutzergerät (402) und mehrere Server (406, 434) aufweist, wobei das Nutzergerät ein Anwendungsmodul (428) aufweist, ausgestaltet, um einen ausführbaren Code zu verarbeiten unter Verwendung von Daten, die von einem ersten Server (406) der mehreren Server abgerufen werden, wobei das zwischengeschaltete Netzwerkelement (404) ein Verarbeitungssystem aufweist, das angeordnet ist, um zu bewirken, dass das zwischengeschaltete Netzwerkelement (404) das Verfahren nach einem der Ansprüche 1 bis 11 ausführt.

13. Computerprogramm, umfassend einen Befehlssatz zur Ausführung durch ein zwischengeschaltetes Netzwerkelement (404) in einem Kommunikationsnetz (400), das ein Nutzergerät (402) und mehrere Server (406, 434) aufweist, wobei das Nutzergerät (402) ein Anwendungsmodul (428) aufweist, das ausgestaltet ist, um einen ausführbaren Code zu verarbeiten unter Verwendung von Daten, die von einem ersten Server (406) der mehreren Server abgerufen werden, wobei der Befehlssatz, wenn er von dem zwischengeschalteten Netzwerkelement (404) ausgeführt wird, bewirkt, dass das zwischengeschaltete Netzwerkelement (404) das Verfahren nach einem der Ansprüche 1 bis 11 ausführt.

## Revendications

1. Procédé de contrôle d'accès à un contenu dans un réseau de communication (400), le réseau de communication comprenant un équipement utilisateur (402), un élément de réseau intermédiaire (404) et une pluralité de serveurs (406, 434), l'équipement utilisateur (402) comprenant un module d'application (428) configuré pour traiter un code exécutable en utilisant des données récupérées à partir d'un premier serveur (406) de la pluralité de serveurs, le procédé comprenant :
l'analyse, au niveau de l'élément de réseau intermédiaire (404), d'un message de demande (436) reçu à partir du module d'application (428) de manière à déterminer une permission d'accès, le message de demande (436) comprenant des premières données identifiant le premier serveur (406) associé au module d'application (428) et des deuxièmes données indicatives d'une demande de contenu à partir d'un deuxième serveur (434) de la pluralité de serveurs, dans lequel la permission d'accès est basée sur un attribut du deuxième serveur (434) satisfaisant un critère prédéterminé par rapport au premier serveur (406) ;
la récupération, au niveau de l'élément de réseau intermédiaire (404), d'au moins une portion du contenu demandé à partir du deuxième serveur (434) sur la base du message de demande (436) ;
au niveau de l'élément de réseau intermédiaire (404), l'inclusion sélective dans un message de réponse (448) d'un paramètre de contrôle d'accès en fonction de la permission d'accès déterminée, le message de réponse (448) comprenant ladite portion du contenu demandé dans lequel ledit paramètre de contrôle d'accès fournit au module d'application (428) une permission d'accès à la portion de contenu récupéré dans le message de réponse (448), et dans lequel le paramètre de contrôle d'accès comprend un en-tête de partage de ressources d'origine croisée configuré pour fournir la permission d'accès ; et
au niveau de l'élément de réseau intermédiaire (404), l'envoi du message de réponse (448) au module d'application.

2. Procédé selon la revendication 1, dans lequel le critère prédéterminé est satisfait lorsque le deuxième serveur (434) est déterminé comme étant différent du premier serveur (406).

3. Procédé selon la revendication 1 ou 2, dans lequel le message de réponse comprend également des données identifiant le deuxième serveur à partir duquel la portion du contenu demandé est récupérée.

4. Procédé selon l'une quelconque des revendications précédentes, dans lequel la permission d'accès est basée en outre sur un autre critère prédéterminé, ledit autre critère prédéterminé étant satisfait lorsque le deuxième serveur (434) est indiqué comme étant un serveur à partir duquel un accès par le module d'application (428) à un contenu doit être accordé.

5. Procédé selon l'une quelconque des revendications 2 à 4, dans lequel le message de réponse (448) comprend le paramètre de contrôle d'accès dans le cas où le critère prédéterminé a été satisfait.

6. Procédé selon l'une quelconque des revendications précédentes, dans lequel l'attribut comprend au moins un parmi un nom de domaine, un protocole de couche d'application et un numéro de port.

7. Procédé selon l'une quelconque des revendications précédentes, dans lequel le message de demande est un message de demande d'origine croisée et le message de réponse est un message de réponse d'origine croisée.

8. Procédé selon l'une quelconque des revendications précédentes, dans lequel le message de demande (436) est un message de demande en langage de balisage extensible et JavaScript asynchrone et le message de réponse (448) est un message de réponse en langage de balisage extensible et JavaScript asynchrone.

9. Procédé selon l'une quelconque des revendications précédentes, dans lequel le module d'application (428) est une application JavaScript qui est exécutée par l'équipement utilisateur (402) en utilisant les données récupérées à partir du premier serveur (406).

10. Procédé selon la revendication 9, dans lequel l'application JavaScript est exécutée par un navigateur Web de l'équipement utilisateur (402).

11. Procédé selon l'une quelconque des revendications précédentes, dans lequel le contenu comprend un contenu multimédia.

12. Elément de réseau intermédiaire (404) pour contrôler l'accès au contenu dans un réseau de communication (400), le réseau de communication (400) comprenant un équipement utilisateur (402) et une pluralité de serveurs (406, 434), l'équipement utilisateur comprenant un module d'application (428) configuré pour traiter un code exécutable en utilisant des données récupérées à partir d'un premier serveur (406) de la pluralité de serveurs, l'élément de réseau intermédiaire (404) comprenant un système de traitement agencé pour faire effectuer à l'élément de réseau intermédiaire (404) le procédé selon l'une quelconque des revendications 1 à 11.

13. Programme informatique comprenant un jeu d'instructions pour l'exécution par un élément de réseau intermédiaire (404) dans un réseau de communication (400) ayant un équipement utilisateur (402) et une pluralité de serveurs (406, 434), l'équipement utilisateur (402) comprenant un module d'application (428) configuré pour traiter un code exécutable en utilisant des données récupérées à partir d'un premier serveur (406) de la pluralité de serveurs, dans lequel le jeu d'instructions, quand il est exécuté par l'élément de réseau intermédiaire (404), fait effectuer à l'élément de réseau intermédiaire (404) le procédé selon l'une quelconque des revendications 1 à 11.
